# EUROPEAN PATENT APPLICATION

(11) **EP 2 996 032 A1**
(43) Date of publication of application: **16.03.2016**
(21) Application number: 15168831.4
(22) Date of filing: 22.05.2015
(51) Int. Cl.: G06F 3/147, G09G 3/18, G09G 3/34, G06Q 30/02

(54) **ELECTRONIC INFORMATION LABEL AND DISPLAYING METHOD THEREOF**

(30) Priority: 10.09.2014 KR 20140119615
(71) Applicant: Samsung Electro-Mechanics Co., Ltd., Gyeonggi-do (KR)
(72) Inventor: Jeon, Jin Il, Seoul (KR); Ryu, Jong Gi, Gyeonggi-do (KR); Cho, Han Jin, Gyeonggi-do (KR); Yoon, Dong Sik, Gyeonggi-do (KR)
(74) Representative: Grünecker Patent- und Rechtsanwälte PartG mbB

(57) **Abstract**

A technology regarding electronic labels that electronically show information regarding products displayed in a store.

The proposed invention independently displays product information of different types through two displays and thus reduces power consumption by using LCD panels. In addition, other aspects of the proposed invention make better use of space by mounting a display panel on a bezel area, and also lower a product's unit cost of production as products, more specifically the two displays therein, may be controlled using only one controller. Furthermore, the proposed invention may allow for the displayed product information to be changed even when the electronic label is in sleep mode.

## Description

### CROSS-REFERENCE TO RELATED APPLICATION(S)

This application claims the benefit under 35 U.S.C. § 119(a) of Korean Patent Application No. 10-2014-0119615, filed on September 10, 2014, in the Korean Intellectual Property Office, the entire disclosure of which is incorporated herein by reference for all purposes.

### BACKGROUND

### 1. Field

The following description relates to a technology regarding electronic labels that electronically show information on products displayed in a store.

### 2. Description of the Related Art

Paper labels attached on product display stands in a store are inconvenient because they must be swapped out when prices on products change. As alternatives to paper labels, a plurality of electronic information labels (ESL) are known to display product information on display stands in stores. Electronic labels communicate with a central server through a gateway. The electronic labels managed by the same gateway may form one group. The electronic labels are divided into a plurality of groups, and each group's product information is updated. To reduce power consumption of electronic labels, which operate on battery power, the electronic labels maintain sleep mode at times other than the wake-up mode, which is the mode required for the information updates. In addition, commonly, the electronic label uses, as a display, an electronic paper display (EPD) that maintains an information display state even without a power supply. During wake-up mode, electronic labels listen to the communication coming from a central server; if there is data to be received from the management server, the electronic labels receive and store the data. Such data includes product information.

The electronic label uses an electronic paper display (EPD) of a seven-segment type or a graphic type.

Price information needs to change frequently at specific time slots or sales. Also, the electronic labels sometimes display information dynamically, such as having certain words such as 'discount' blink on and off during promotions. Though the EPD minimizes power consumption while maintaining a display state, it consumes a lot of power when the displayed information is being changed.

### SUMMARY

The proposed invention provides an electronic label, which displays product information that has high variability and can operate on low power. In addition, the proposed invention provides an electronic label that can display various information of promotion.

Furthermore, the proposed invention can make better use of the electronic label's space to minimize the electronic label.

In one general aspect, an electronic label includes a display area A and a display area B that operates on lower voltage than that of the display area A. The display area A displays information A which has variability, and the display area B displays information B which has higher variability than the information A.

The display area B may be set above an edge on which a driver chip of the display area A is mounted, and be also set on a bezel of the electronic label.

The display area A may be an electronic paper display (EPD), and the display area B may be a liquid crystal display (LCD).

The controller may include a main controller to control the electronic label overall, and an EPD controller to control the EPD.

The controller may include a LCD controller to control the LCD.

The electronic label may update product information even during sleep mode.

### BRIEF DESCRIPTION OF THE DRAWINGS

FIG. 1 is a diagram illustrating an overall configuration of a system for managing an electronic label according to an exemplary embodiment.
FIG. 2 is a diagram illustrating a partial configuration of an electronic label according to an exemplary embodiment.
FIG. 3 is a diagram illustrating a configuration of an electronic label according to an exemplary embodiment.
FIG. 4 is a diagram illustrating a configuration of an electronic label according to an exemplary embodiment.
FIG. 5 is a diagram illustrating a configuration of an electronic label according to an exemplary embodiment.
FIG. 6 is a diagram illustrating an overall configuration of an electronic label according to an exemplary embodiment.
FIG. 7 is a diagram illustrating an overall configuration of an electronic label according to another exemplary embodiment.
FIG. 8 is a flowchart illustrating an example of an operation of updating product information.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

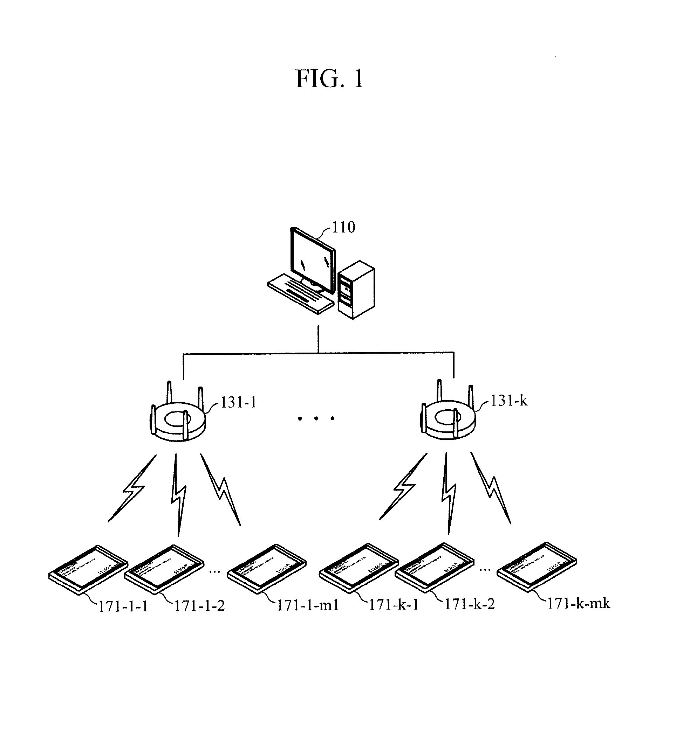

FIG. 1 is a diagram illustrating an overall configuration of a system for managing an electronic label according to an exemplary embodiment. A system for managing an electronic label includes a central server 110, gateways 131-1, ..., 131-k, and electronic labels 171-1-1, 171-1-2, ..., 171-1-m1, ..., 171-k-1, 171-k-2, ..., 171-k-mk. The central server 110 provides information related to products (e.g., product name, product price, expiry date) to be displayed on the electronic labels 171-1-1, 171-1-2, ..., 171-1-m1, ..., 171-k-1, 171-k-2, ..., 171-k-mk. The gateway 131-1, ..., 131-k may be installed as a wired/wireless conversion apparatus on the ceiling in a store

The electronic labels are managed in at least one or more groups, and the product information is updated therein. In order to save battery power, the electronic labels are usually in sleep mode and then into wake-up mode only when the product information is being updated. In the system for managing electronic labels, the central server 110 and the gateways communicate with each other over an internal wired network, while the gateways communicate with the electronic labels according to near field wireless communications, e.g., a protocol that is set on a physical/ media access controller (PHY/MAC) layer based on IEEE 802.15.4 standard. When the electronic labels are in wake-up mode, the central server 110 transmits, through the gateways, product information to the electronic labels that are managed in at least one or more groups.

The electronic labels include a plurality of display areas. Information that has been transmitted from the central server 110 and that has low variability is displayed in a first certain area of the display, which may be referred to as display area A, that consumes little power in maintaining the display state although operating on high voltage. Information which has been transmitted from the central server 110 and which has high variability is displayed in second another area of the display, which may be referred to as display area B, that operates on low voltage.

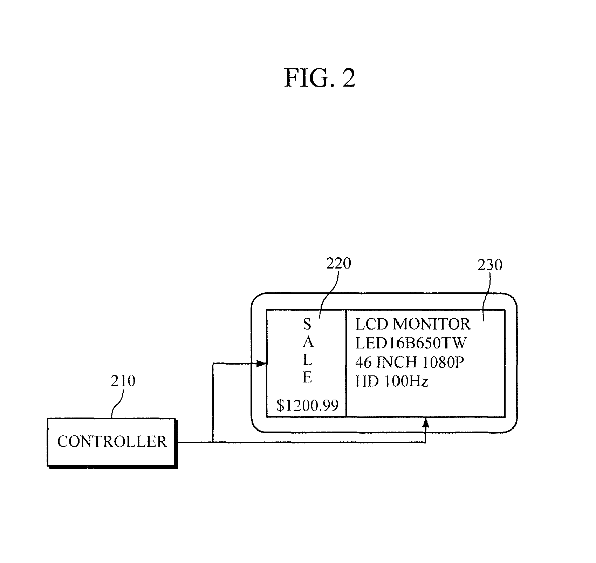

FIG. 2 is a diagram illustrating a partial configuration of an electronic label according to an exemplary embodiment. According to the exemplary embodiment, the electronic label may include display area A, display area B, and a controller. Display area A operates on high voltage, and display area B operates on low voltage. Display area A operates on high voltage, e.g., a pulse having 17V voltage, and as thus consumes a minimal amount of power when maintaining a display state. Display area B operates on lower voltage than the voltage it takes to run display area A. Accordingly, the controller enables display area A to display information A that has low variability and display area B to display information B that has high variability. In addition, the controller may update the display areas independently from one another. One product information, which may be referred to as information A, may have lower variability than another, which may be referred to as information B. Since the update times between these two would be different, dividing the display into different areas would allow for each area to update and show information independently and thus reduce the electronic label's battery consumption.

For example, information A, which is product information that has variability, includes information on a product itself, such as name, place of origin, weight, etc.; information B, which is product information that has higher variability than information A, may include promotion information and/or its price promotion. The displayed promotion information may show the word 'sale' or 'discount' together with the actual discounted price or show the discounted product price while the word 'sale' or 'discount' is blinking on and off. Of the product information shown on the electronic labels, the display operating on lower voltage displays information B which has higher variability than information A, so as to reduce the battery consumption than the display operating on high voltage.

Display area B in FIG. 1 displays the word 'SALE' and the price, while display area A displays a product's name and its details. Unless the product is removed, or no longer present, the content displayed on the corresponding electronic label, and more specifically, in display area A therein remains the same. However, the content displayed in display area B may be changed at any time during a special marketing event, such as a promotion. The promotion-related information is transmitted to the electronic labels from a central server through gateways. For example, if a product were to go on sale, a central server would control the electronic label to update, to the discounted price, the price shown on the electronic label of the pertinent product and to display the discounted price. Additionally, the central server would activate the promotion function of each corresponding electronic label. Promotion information may be updated according to the information received from the central server.

Display area A may be an electronic paper display (EPD), and display area B may be a liquid crystal display (LCD). There are many well-known EPDs, some of which are Xerox Corporation's twist ball type, which uses a hemispherical twist ball charged with electrostatic charges; E-ink Corporation's electrophoresis display, which applies electrophoresis and microcapsules; and Kent Display Inc.'s cholesterol liquid crystal display, which uses cholesterol liquid crystal display. According to exemplary embodiments illustrated in the present disclosure, the EPD may be a product that is made to include: 1) a thin film transistor (TFT) substrate in which the TFT is formed on a polysilicon layer deposited on a plastic substrate, 2) a transparent electrode substrate, and 3) a microcapsule layer sealed in between; and that is formed with complementary metal-oxide-semiconductor (CMOS) circuits by re-crystalizing a corner area of the TFT substrate. The EPD operates on a voltage that is higher than the standard value, and consumes minimal power when maintaining a display state.

The liquid crystal display or liquid display device, abbreviated as LCD, is a type of thin display, which is widely used in portable devices due to the said display's small power consumption. One pixel is made of a liquid crystal to which two transparent electrodes are connected and of which two sides have polarizing filters perpendicular to each other. Light normally passes through the display's liquid-crystal molecules and their alignment.. However, if a voltage is applied, the alignment becomes fixed so that light cannot pass through and is blocked.

In one exemplary embodiment, an EPD displays information A, which has low variability. An EPD operates at 17V, which is a voltage that is higher than an LCD. To reduce power consumption of electronic labels, which operate on battery power, the electronic labels maintain sleep mode at times other than the wake-up mode, which is the mode required for the information updates. An EPD is capable of maintaining a state while an electronic label is in sleep mode. In other words, an EPD is capable of maintaining a state in which information is displayed even when there is no power supply provided to the EPD, thereby reducing the power consumption of the electronic labels. In one exemplary embodiment, an LCD displays information B, which has higher variability than information A. An LCD is capable of maintaining the display state only when there is a power supply provided even while the controller of the electronic label is in sleep mode. However, since an LCD operates on low voltage, the LCD consumes little power in displaying information that often changes. Also, a color LCD is capable of displaying promotion-related information in various colors, which may attract the attentions of customers even more.

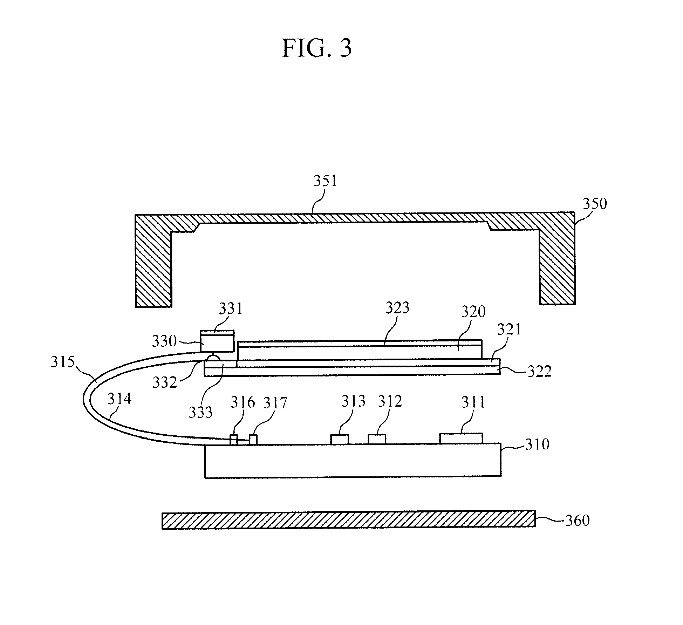

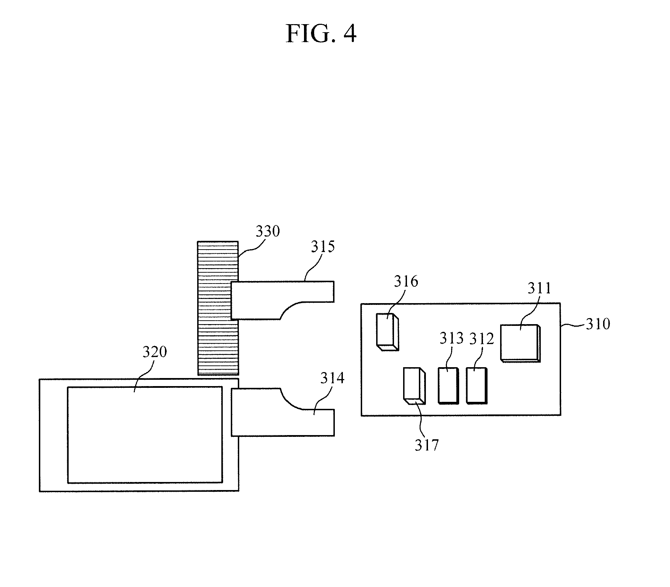

FIGS. 3 and 4 are diagrams, according to exemplary embodiments, illustrating a configuration of an electronic label. FIG. 3 illustrates a printed circuit board (PCB), a ZigBee system on chip (SOC) mounted thereon, an EPD controller chip, an LCD controller chip, and a connector. Referring to FIG. 3, the electronic label includes an upper housing 350 of a transparent material and a lower housing 360 that is coupled to the upper housing 350so as to seal inner components. Specifically, the lower housing 360 is a box that accommodates components and surrounds all the electronic devices, such as a frame on which devices are set. The upper housing 350 may include a window 351 that displays product information. The window 351 is a display area of product information, and its inner side may be a thin socket area. As illustrated in FIGS. 3 and 4, the left side of the window 351 may extend to an LCD substrate 330. The example is not limited thereto, and the window 351 may be formed to be appropriate for the size of an available display surface of the EPD.

In addition, the electronic label may include a printed circuit board (PCB) 310 on which circuit components, required for controlling wireless communications devices, are mounted. The PCB 310 may include two connectors 316 and 317, an EPD controller chip 312, an LCD controller chip 313, and a ZigBee system on chip (SOC) 311, which are mounted thereon.

The two connectors 316 and 317 are mounted on top of a PCB 310. The LCD substrate 330 and an EPD substrate 320 are connected respectively to the two connectors 316 and 317 of the PCB 310 through flexible printed circuit boards (FPCB) 314 and 315.

As illustrated in FIGS. 3 and 4, the EPD may be a product that is made to include: 1) a thin film transistor (TFT) substrate 321 in which the TFT is formed on a polysilicon layer deposited on a plastic substrate 322, 2) a transparent electrode substrate, and 3) a microcapsule layer sealed in between; and that is formed with complementary metal-oxide-semiconductor (CMOS) circuits 333 by re-crystalizing a corner area of the TFT substrate 321. A transparent electrode 323 on the upper side of the EPD substrate 320 is made mostly of indium tin oxide (ITO). ITO is a solid solution of indium(III) oxide (In2O3) and tin(IV) oxide (SnO2), which is transparent in the visible part of the spectrum, reflects in the infrared region of the spectrum, and is stable at room temperature that has relatively lower electrical resistance. The EPD operates on higher voltage than the standard, and consumes a minimal amount of power when maintaining the display state.

The LCD substrate 330 is set above the edge on which a driver chip 332 of the EPD substrate 320 is mounted, and is also set on a bezel of the electronic label. The LCD substrate is set above the driver chip 332. Above the driver chip 332 is a bezel area, which makes up the outer edges of a surface of the electronic label. The LCD substrate 330 is set on the bezel area so as to make better use of the electronic label's space.

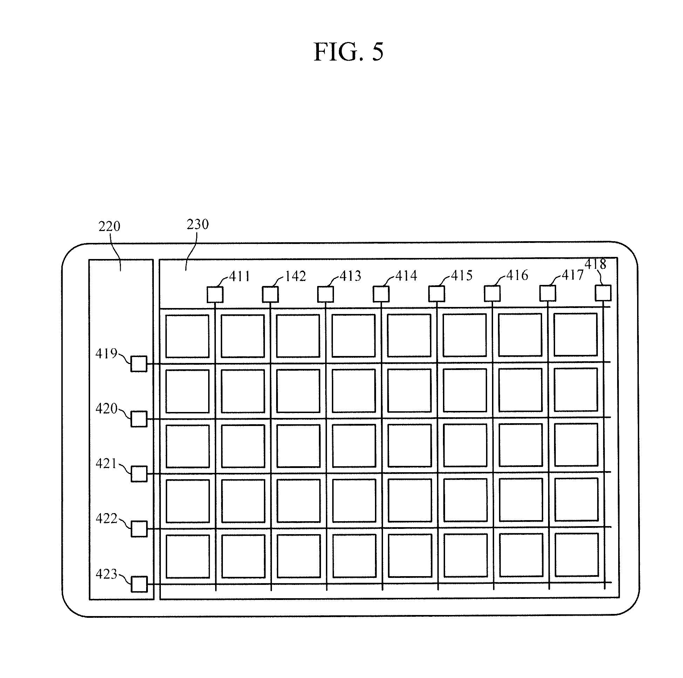

FIG. 5 is a diagram illustrating a configuration of an electronic label according to an exemplary embodiment. An LCD substrate is set above an EPD driver chip. In FIG. 5, the LCD is set above the EPD driver chip that is positioned on a left side of the electronic label. However, the LCD may be set on the right side or the upper side of the electronic label. Above the EPD driver chip is a bezel, which makes up the outer edges of a surface of the electronic label. The LCD substrate is set on the bezel area so as to make better use of the electronic label's space.

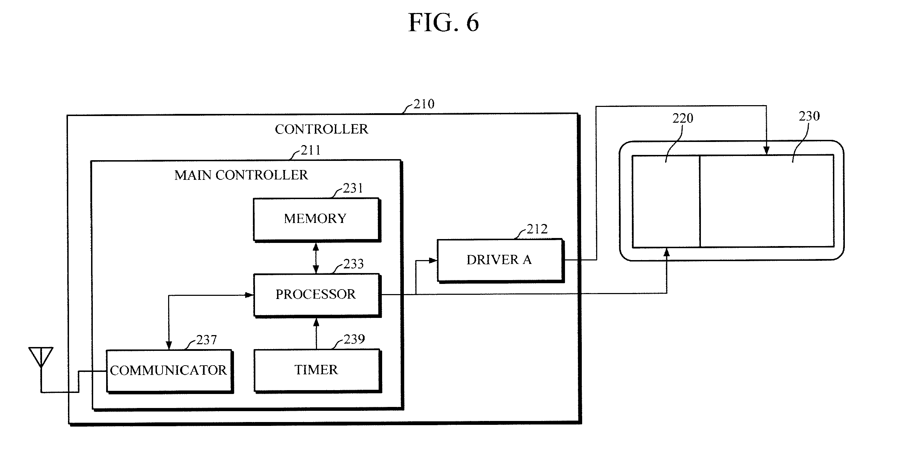

FIG. 6 is a diagram illustrating an overall configuration of an electronic label according to an exemplary embodiment. In the exemplary embodiment, a controller includes a main controller and a driver, which will be referred to as 'driver A'. The main controller controls the electronic label overall. According to FIG. 6, the main controller is a wireless communications system integrated circuit that processes wireless communications of the electronic label. Such an integrated circuit (e.g., system on chip, or SoC) includes a processor 233, a memory 231, and a timer 239, as well as a communicator 237 that processes wired communications, which are integrated on one semiconductor chip. The processor 233 operates as a controller, which controls the entire apparatus. The timer 239 operates even when the processor 233 goes into sleep mode, generates interrupts at regular intervals that are set by the processor 233, and wakes up the processor 233. Such a wake-up time slot may be determined for an electronic label managing server to prevent collisions of the wake-up time between the electronic labels by the EPD management server

The electronic label includes driver A that scans rows and columns of display area A. Driver A is interfaced with the main controller to control display area A. If the electronic label receives, from the communicator 237, product information to be displayed when being waked up at regular intervals according to the control of the processor 233, the processor 233 controls driver A so that the said driver displays the received product information on display area A. As illustrated in FIG. 5, display area A is operated by gate lines and data lines. For example, driver A may be a display controller that outputs display data signals to the gate lines and the data lines. In another example, driver A may be a complementary metal-oxide-semiconductor (CMOS) circuit that is integrated on one end of an EPD substrate. The EPD substrate may be formed on a polysilicon that has low crystallization, and the CMOS driver circuit may be formed through additional processes after re-crystalizing the polysilicon to increase the crystallinity. The gate lines and the data lines in display area A are operated by separate driver circuits so as to enable information to be displayed independently of each other. As illustrated in FIG. 6, driver A communicates with the processor 233 through a serial interface and receives display data (e.g., an image frame) from the processor 233.

As illustrated in FIG. 6, an LCD 220 is directly controlled by output ports of the processor 233. For example, the LCD 220 is a segment LCD, and the processor 233 may turn on or off each of the segments by using the number of general output ports corresponding thereto.

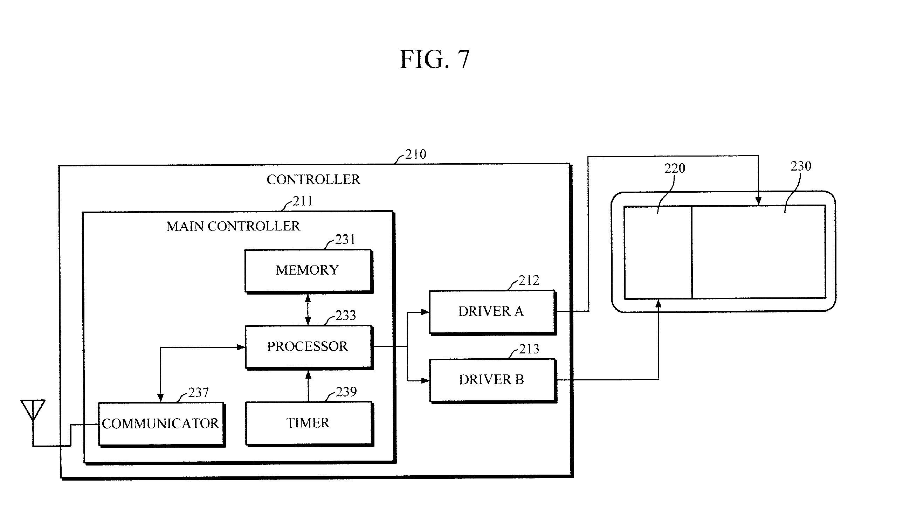

FIG. 7 is a diagram illustrating an overall configuration of an electronic label, according to another exemplary embodiment. In the exemplary embodiment, the controller includes a driver, which will be referred to as 'driver B'. Driver B is interfaced with a main controller through, for example, a serial interface so as to control display area B. As illustrated in FIG. 7, the main controller is interfaced with driver A, driver B, and the Serial Peripheral Interface (SPI) bus. The SPI, which is an interface that enables data to be exchanged between two devices through serial communication, may implement various functions conveniently by using only a data output pin, a data input pin, a clock pin, and a slave selection pin because the interface itself is simple and serial but high-speed.

For example, driver A may be a display controller circuit that outputs display data signals to gate lines and data lines of an EPD. In another example, driver B may be a display controller circuit that controls an image frame to be displayed on an LCD. In yet another example, driver B may be a segment display controller circuit that controls each segment of a segment LCD to be turned on or off.

An electronic label includes two drivers that control each display but it may be controlled by one main controller. In an internal memory, the rest memory, acquired after excluding the memory that stores product information to be displayed on an EPD, may store product information to be displayed on an LCD.

The main controller goes into sleep mode after transmitting display update information to driver B, and driver B periodically changes the display in display area B according to the display update information that has been received from the main controller 211. For example, driver B may store promotion information. In another example, driver B may continuously operate independently from the main controller even when the main controller is in sleep mode. Driver B displays, in display area B, the stored promotion information (e.g., an image to be displayed) so that it blinks at regular intervals. Even when the main controller is in sleep mode, driver B still operates and the information blinks on driver B using low power. The duration of the said blinking is set by a store manager and is received by a processor 233 through a communicator 237 during wake-up mode so as to be transmitted to driver B 213.

In one exemplary embodiment, there may be methods of displaying information A and information B on an electronic label. One method may be that display area A displays information A that has low variability. Another method may be that display area B displays, independent of what is displayed in display area A, information B that has high variability. For example display area A may operate on high voltage, while display area B operates on low voltage. Display area A may operate on higher voltage than the standard, and display area B may operate on lower voltage than the voltage it takes to run display area A. Since information A is product information that has variability, and information B is product information that has even more variability than information A., Information A and information B each have different update periods, which is why when the display were to be divided into different areas and their respective information is updated independently of each other, battery consumption of the pertinent electronic label would be reduced.

In another example, information A, which is product information that has variability, includes information on a product itself, such as the product name, place of origin, weight, etc.; information B, which is product information that has higher variability than information A, includes promotion information and its price information in relation to the promotion. The displayed promotion information may show the word 'sale' or 'discount' together with the actual discounted price or show the discounted product price while the word 'sale' or 'discount' is blinking on and off. Of the product information that an electronic label shows, the display operating on lower voltage displays information B, which is of higher variability than information A, so as to reduce battery consumption compared to that of a display operating on higher voltage.

In FIG. 2, display area B displays the word 'SALE' and the price; display area A displays the product's name and its details. Until the product is removed or no longer present, the content displayed on display area A remains the same, and the content displayed on display area B may be changed at any time during a special marketing events, such as a promotion. The promotion-related information is transmitted to the electronic labels from a central server through gateways. For example, if a product were to go on sale, a central server would control the electronic label to update, to the discounted price, the prices shown on the electronic labels of the pertinent product and to display the discounted price. The central server may activate the promotion function of each corresponding electronic label. Furthermore, the promotion information may be transmitted from the central server and be updated at any time.

In one exemplary embodiment, a method of displaying an electronic label includes: transmitting, by a main controller, display update information to driver B after an electronic label receives information that has high variability; going into sleep mode after a main controller transmits the display update information to driver B; and periodically changing, by the main controller, a display on display area B during sleep mode according to the display update information that has been received by driver B. For example, driver B may store promotion information. In another example, driver B may continuously operate independently of the main controller even when the main controller is in sleep mode. Driver B may show the information by displaying, in the display area B, the stored promotion information (e.g., an image to be displayed) and after a predetermined period of time, repeatedly operating the display entirely in white, thus displaying what looks to be a blinking sign. Even when the main controller is in sleep mode, driver B operates and the display on the electronic label blinks using low power.

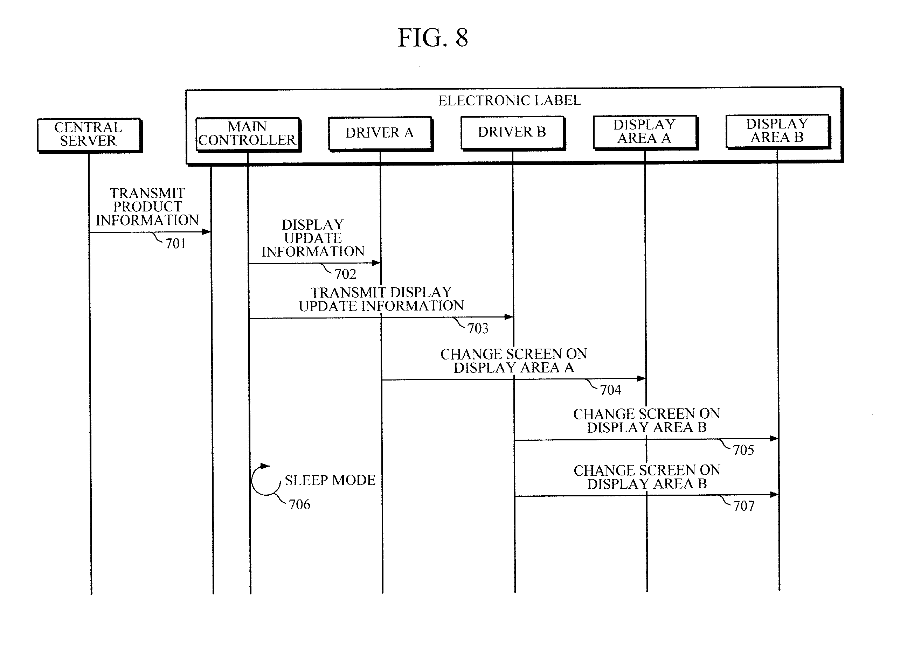

FIG. 8 is a flowchart illustrating an example of an operation of updating product information. During wake-up mode, an electronic label listens to communications from a central server, which transmits data, including product information, to the electronic label, as illustrated in 701. After the transmission of the said product information, a main controller transmits display update information to driver A, as illustrated in 702. The main controller also transmits the display update information to driver B, as illustrated in 703. The operations 702 and 703 may be switched.

Driver A that has received the display update information changes the display in display area A, as illustrated in 704. Driver B that has received the display update information changes the display in display area B, as illustrated in 705. Display area A operates on higher voltage than the standard, and display area B operates on lower voltage than the voltage it takes to run display area A. Since information A, displayed by display area A, is product information that has variability, and information B, displayed by display area B, is product information that is more variable than information A. Information A and information B each have different information update periods, which is why when the display were to be divided into different areas and their respective information is updated independently of each other, battery consumption of the pertinent electronic label would be reduced.. The operations 704 and 705 may be switched, and even if the operation 704_is performed prior to the operation 705, the actual changes in the product information may first appear in display area B rather than display area A.

To reduce power consumption of the battery-powered electronic label, the electronic label maintains sleep mode, as illustrated in 706; the said sleep mode is maintained at times other than wake-up mode, which is required for the information updates. Even when the main controller is in sleep mode, display area A maintains a state in which information is displayed even without the power supply to the EPD. Since display area A displays product information that has less variability than that of display area B, the need for a display to change is less frequent in display area A during sleep mode. Since the product information displayed in display area B includes promotion information and its price information according to the promotion, etc., the product information needs to be updated for the purpose of customer marketing even when the main controller is in sleep mode, as illustrated in 706. Driver B receives, from the main controller, the product information that the electronic label has received from a central server, and stores the product information. Driver B changes the display in display area B independent of the main controller, even when the main controller is in sleep mode, as illustrated in 707.

The proposed invention independently displays product information of different types through two displays and thus reduces power consumption by using LCD panels. In addition, other aspects of the proposed invention make better use of space by mounting a display panel on a bezel area, and also lower a product's unit cost of production as products, more specifically the two displays therein, may be controlled using only one controller. Furthermore, the proposed invention may allow for the displayed product information to be changed even when the electronic label is in sleep mode.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An electronic label that receives and displays product information over a wired communications network with a central server, the electronic label comprising:
a display area A configured to operate on high voltage;
a display area B configured to operate on low voltage; and
a controller configured to control information A which has low variability and is displayed in the display area A, to control information B which has high variability and is displayed in the display area B, and to update a display of the display area B independent of the display area A.

2. The electronic label of claim 1, wherein the display area A is an electronic paper display (EPD), and the display area B is a liquid crystal display (LCD).

3. The electronic label of claim 1, wherein display area B is set above an edge on which a driver chip of the display area A is mounted, and is also set on a bezel of the electronic label.

4. The electronic label of claim 1, wherein the controller comprises a main controller configured to control the electronic label overall, and an EPD controller configured to be interfaced with the main controller so as to control an EPD.

5. The electronic label of claim 4, wherein the controller further comprises a liquid crystal display (LCD) controller configured to be interfaced with the main controller so as to control an LCD.

6. The electronic label of claim 5, wherein the main controller is configured to go into sleep mode after transmitting display update information to the LCD controller, and the LCD controller is configured to periodically change a display on an LCD based on the received display update information.

7. A method that receives and displays product information over a wired communications network with a central server, comprising:
displaying, via a display area A, information A which has low variability; and
displaying, independent of the display area A via a display area B, information B which has high variability.

8. The method of claim 7, further comprising:
transmitting, by a main controller, display update information to a driver B after receiving information that has high variability at an electronic label;
going into sleep mode in response to the transmission of the display update information to the driver B by the main controller; and
periodically changing, by the main controller, a display of a display area B during sleep mode based on the display update information that has been received by the driver B.
